# EUROPEAN PATENT APPLICATION

(11) **EP 2 800 372 A1**
(43) Date of publication of application: **05.11.2014**
(21) Application number: 12862205.7
(22) Date of filing: 27.12.2012
(51) Int. Cl.: H04N 7/36

(54) **METHOD AND DEVICE FOR ENCODING THREE-DIMENSIONAL IMAGE, AND DECODING METHOD AND DEVICE**

(30) Priority: 30.12.2011 KR 20110146783; 30.12.2011 KR 20110146784; 30.12.2011 KR 20110146785
(71) Applicant: Humax Co., Ltd., Seongnam-si, Gyeonggi-do 463-825 (KR)
(72) Inventor: YIE, Chung Ku, Incheon 403-762 (KR); LEE, Yong Jae, Seoul 139-200 (KR); KIM, Hui, Namyangju-si Gyeonggi-do 472-877 (KR)
(74) Representative: Zardi, Marco
(86) International application number: PCT/KR2012/011576
(87) International publication number: WO 2013/100635

(57) **Abstract**

Disclosed is a method for encoding an image through motion vector prediction which can be applied to a three-dimensional image, an encoding device, a decoding method, and a decoding device. The encoding method is an encoding method for a current prediction unit in a three-dimensional image, and comprises the steps of: selecting a motion vector of a peripheral block having the same depth as a current prediction unit as a candidate prediction motion vector of the current prediction unit, among motion vectors of already-encoded peripheral blocks of the current prediction unit; and performing inter prediction based on the candidate prediction motion vector, predicting a motion vector of the current prediction unit, and transmitting the motion vector to a decoder. Thus, a candidate for a prediction motion vector can be efficiently selected with respect to a three-dimensional image having depth information.

## Description

### BACKGROUND OF THE INVENTION

### Field of the invention

The present invention concerns a method and device of encoding an image and a method and device of decoding an image, and more specifically, to a method and device of encoding a three-dimensional (3D) image and a method and device of decoding a 3D image.

### Related Art

Image compressing methods typically use inter prediction and intra prediction techniques to remove redundancy of pictures to increase compression efficiency.

A method of encoding an image using inter prediction removes temporal redundancy between pictures to compress images, and its representative example is a motion compensation prediction encoding method.

The motion compensation prediction encoding searches for a region similar to a block currently being encoded in at least one reference picture positioned before and/or behind a picture currently being encoded to generate a motion vector (MV) and to perform DCTs (Discrete Cosine Transforms), quantizes, and entropy-encoding on a residue of the current prediction unit and prediction block obtained by performing motion compensation using the generated motion vector, and then transmits a result.

In the case of motion compensated inter-prediction, one picture is split into a plurality of blocks each having a predetermined size to thus generate a motion vector and motion compensation is carried out using the generated motion vector. Individual motion parameters for each prediction block obtained by performing motion compensation are sent to a decoder.

Each pixel in a 3D image contains depth information as well as pixel information. An encoder acquires depth information and sends multi-view video image information and depth information to the decoder. At this time, motion vector prediction is used. A motion vector of a neighbor block of a current prediction unit is used as a candidate block of a prediction motion vector. A 3D image having depth information requires a scheme of efficiently applying the prediction motion vector.

In existing H.264/AVC standards, when intra prediction encoding applies to 4 pixel-basis blocks, the most proper one of nine prediction modes (i.e., prediction modes 0 to 8) is selected per 4-pixel block and the selected prediction mode is encoded per 4-pixel block.

Further, since in the H.264/AVC standards, an image, when encoded at a low bit rate, is stored in a frame memory with a block distortion occurring in the decoded image, and the block distortion-contained image is referenced to do encoding in the motion compensation process for a subsequent picture, a deterioration of image quality is also transferred. To address this, adaptive deblocking filtering is used that removes the block distortion before storing the decoded image in the frame memory.

In other words, adaptive deblocking filtering prevents the reference image from being delivered to the decoded image with the image block distortion contained in the reference image by adaptively applying a deblocking filter to both a position where a block distortion easily occurs and a position where a block distortion hardly occurs, thus resulting in output of a good decoded image.

A 3D video contains separate depth information due to the characteristics of 3D, and an encoder typically generates depth information and sends the depth image and multi-view color image to a decoder. When the above-mentioned deblocking filter applies to 3D videos, a need exists for a scheme for efficiently determining whether to apply a deblocking filter to a block boundary using the depth information.

### SUMMARY OF THE INVENTION

An object of the present invention is to provide a method and device of encoding an image through motion vector prediction that may be applied to 3D images.

Another object of the present invention is to provide a method and device of decoding an image through motion vector prediction that may be applied to 3D images.

Still another object of the present invention is to provide a method and device of encoding a 3D image using block merging in consideration of depth information that may be applied to 3D images.

Still another object of the present invention is to provide a method and device of decoding a 3D image that uses block merging in consideration of depth information.

Still another object of the present invention is to provide a deblocking filtering method that may enhance encoding efficiency while maintaining quality of 3D images.

Yet still another object of the present invention is to provide an in-loop filtering method that may enhance encoding efficiency while maintaining quality of 3D images.

To achieve the above-described objects, a method of performing encoding on a current prediction unit in a 3D image may include selecting a motion vector of a neighbor block having the same depth as the current prediction unit as a candidate prediction motion vector of the current prediction unit among neighbor blocks previously encoded of the current prediction unit, and performing inter prediction based on the candidate prediction motion vector to predict a motion vector of the current prediction unit and sending the predeicted motion vector to a decoder.

The neighbor blocks may include a first block positioned at a lowermost and left side of the current prediction unit, a second block adjacent to a lower side of the first block, a third block positioned at an upper and rightmost side of the current prediction unit, a fourth block adjacent to a right side of the third block, and a fifth block positioned at an upper and left side of the current prediction unit.

Selecting the candidate motion vector may include, when at least three neighbor blocks have the same depth as the current prediction unit, sequentially determining whether the first block, the second block, the third block, the fourth block, and the fifth block may be used as a candidate prediction motion vector of the current prediction unit in the order of the first block, the second block, the third block, the fourth block, and the fifth block to select a candidate prediction motion vector of the current prediction unit.

Selecting the candidate prediction motion vector may include, when there is no neighbor block having the same depth as the current prediction unit, sequentially determining whether the first block, the second block, the third block, the fourth block, and the fifth block may be used as a candidate prediction motion vector of the current prediction unit in the order of the first block, the second block, the third block, the fourth block, and the fifth block to select a candidate prediction motion vector of the current prediction unit.

The neighbor blocks may include a first block adjacent to a left side of the current prediction unit, a second block adjacent to an upper side of the current prediction unit, and a third block adjacent to a right side of the second block.

The neighbor blocks may include a first block adjacent to an uppermost and left side of the current prediction unit, a second block adjacent to an upper and leftmost side of the current prediction unit, and a third block positioned at an upper and right side of the current prediction unit.

To achieve the above-described objects, a method of performing decoding on a current prediction unit in a 3D image may include performing entropy decoding, inverse quantization, and inverse transformation on a received bit stream, selecting a motion vector of a neighbor block having the same depth as the current prediction unit as a candidate prediction motion vector of the current prediction unit among previously encoded neighbor blocks of the current prediction unit based on the inverse-transformed bit stream, and performing inter prediction based on the candidate prediction motion vector and predicting a motion vector of the current prediction unit to reconstruct an image.

The neighbor blocks may include a first block positioned at a lowermost and left side of the current prediction unit, a second block adjacent to a lower side of the first block, a third block positioned at an upper and rightmost side of the current prediction unit, a fourth block adjacent to a right side of the third block, and a fifth block positioned at an upper and left side of the current prediction unit.

Selecting the candidate motion vector may include, when at least three neighbor blocks have the same depth as the current prediction unit, sequentially determining whether the first block, the second block, the third block, the fourth block, and the fifth block may be used as a candidate prediction motion vector of the current prediction unit in the order of the first block, the second block, the third block, the fourth block, and the fifth block to select a candidate prediction motion vector of the current prediction unit.

Selecting the candidate prediction motion vector may include, when there is no neighbor block having the same depth as the current prediction unit, sequentially determining whether the first block, the second block, the third block, the fourth block, and the fifth block may be used as a candidate prediction motion vector of the current prediction unit in the order of the first block, the second block, the third block, the fourth block, and the fifth block to select a candidate prediction motion vector of the current prediction unit.

The neighbor blocks may include a first block adjacent to a left side of the current prediction unit, a second block adjacent to an upper side of the current prediction unit, and a third block adjacent to a right side of the second block.

The neighbor blocks may include a first block adjacent to an uppermost and left side of the current prediction unit, a second block adjacent to an upper and leftmost side of the current prediction unit, and a third block positioned at an upper and right side of the current prediction unit.

To achieve the above-described objects, a method of encoding a 3D image by performing block merging on a current prediction unit of the 3D image may include merging neighbor blocks of the current prediction unit with the current prediction unit, and transmitting a motion parameter of the merged block to a decoder, merging the neighbor block including selecting a neighbor block having the same depth as a depth of the current prediction unit as a mergeable block set, and determining availability as a candidate for block merging based on a block belonging to the mergeable block set, and based on a result of the determining availability, performing block merging based on a block available as a candidate for block merging.

The neighbor blocks may include a first block positioned at a lowermost and left side of the current prediction unit, a second block adjacent to a lower side of the first block, a third block positioned at an upper and rightmost side of the current prediction unit, a fourth block adjacent to a right side of the third block, and a fifth block positioned at an upper and left side of the current prediction unit.

Performing the block merging further may include selecting a candidate block having the same motion vector as the current prediction unit as a final candidate block among the candidate blocks.

The neighbor block may be a block split by at least one of symmetrical partitioning, asymmetrical partitioning, and geometrical partitioning.

A method of performing decoding on a current prediction unit in a 3D image may include reconstructing a residue by entropy-decoding, inverse-quantizing, and inverse-transforming a received bit stream, generating a prediction unit by performing motion compensation using a motion parameter and prediction unit information based on the inverse-transformed bit stream, and reconstructing an image by adding the residue to the prediction unit, wherein a neighbor block having the same depth as the current prediction unit among neighbor blocks of the current prediction unit may be included in a mergeable block set, and wherein among blocks included in the mergeable block set, a block merged with the current prediction unit has the same motion parameter.

The neighbor blocks include a first block positioned at a lowermost and left side of the current prediction unit, a second block adjacent to a lower side of the first block, a third block positioned at an upper and rightmost side of the current prediction unit, a fourth block adjacent to a right side of the third block, and a fifth block positioned at an upper and left side of the current prediction unit.

The neighbor block may be a block split by at least any one of symmetrical partitioning, asymmetrical partitioning, and geometrical partitioning.

To achieve the above-described objects, a deblocking filtering method may include determining whether to apply a deblocking filter or not based on a depth value of a previously encoded neighbor block of a current block and a depth value of the current block, and setting a block boundary strength between the current block and the neighbor block when it is determined that the deblocking filter is applied. Determining whether to apply the deblocking filter or not may include determining to apply the deblocking filter to a boundary between the current block and the neighbor block when the depth value of the current block is the same as the depth value of the neighbor block. Setting the block boundary strength may include determining whether inter prediction has been applied to the previously encoded neighbor block of the current block or not, when it is determined that inter prediction has been applied to the previously encoded neighbor block of the current block, determining whether the boundary between the current block and the neighbor block is a boundary of a prediction unit or not, and when the boundary between the current block and the neighbor block is the boundary of the prediction unit, setting a block boundary strength of a deblocking filter as a highest first value, when it is determined that inter prediction has been applied to the neighbor block of the current block but the boundary between the current block and the neighbor block is not the boundary of the prediction unit, setting the block boundary strength as a second value lower than the first value, when it is determined that not the intra prediction but inter prediction has been applied to the neighbor block of the current block, determining whether the neighbor block of the current block may include encoded coefficients, when the neighbor block of the current block may include the encoded coefficient, setting the block boundary strength as a third value lower than the second value, when it is determined that not the intra prediction but inter prediction has been applied to the neighbor block of the current block and when the neighbor block of the current block does not include the encoded coefficient, if the neighbor block of the current block has a different reference picture or different motion vector from the current block, setting the block boundary strength as a fourth value lower than the third value, and when it is determined that not the intra prediction but inter prediction has been applied to the neighbor block of the current block and when the neighbor block of the current block does not include the encoded coefficient, unless the neighbor block of the current block has a different reference picture or a different motion vector from the current block, setting the block boundary strength as a lowest fifth value lower than the fourth value.

To achieve another object of the present invention, an in-loop filtering may include applying a deblocking filter and selectively processing, per partitioned block of the current block after deblocking filtering, a sample adaptive offset (SAO) for compensating a DC offset that is an average difference between original pixels and deblocking filtered pixels for the deblocking filtered pixels after deblocking filtering. The in-loop filtering may further include selectively applying an adaptive loop filter (ALF) using a Wiener filter that minimizes a sum of square errors between the original pixels and decoded pixels after processing the SAO.

Methods and devices of encoding and decoding a 3D image may efficiently select a candidate prediction motion vector for a 3D image having depth information.

The methods and devices of encoding and decoding a 3D image may increase accuracy while reducing complexity in selecting a motion vector of a current prediction unit of a 3D image by using as a prediction value of a motion vector of the current prediction unit on a neighbor block having the same depth as the depth of the current prediction unit.

Methods and devices of encoding and decoding a 3D image using block merging in consideration of depth information according to the present invention may efficiently select a mergible block set on a 3D image having depth information.

Further, methods and devices of encoding and decoding a 3D image using block merging in consideration of depth information according to the present invention may increase accuracy while reducing complexity upon block merging of a current prediction unit of a 3D image by performing inter prediction with a mergible block set containing a neighbor block having the same depth as the depth of the current prediction unit, thus providing for a high-quality 3D image.

The above-described deblocking filtering method may determine whether to perform deblocking filtering or not by determining whether there is the same object on a block boundary between blocks, to which intra prediction encoding was applied, based on depth information, and performing deblocking filtering by setting with different block boundary strengths considering encoding mode of correspondingblock, whether it is at the boundary of a coding unit, whether it includes an encoded coefficient or not, and whether the motion vectors are different from each other.

Accordingly, unnecessary deblocking filtering may be prevented, and deblocking filtering may be carried out at the optimal block boundary strength, thus leading to an enhancement in the quality of decoded images together with an increase in encoding efficiency.

Further, after deblocking filtering is done, the pixels processed with the deblocking filter are subjected to an additional sample adaptive offset (SAO) for compensating for DC offset, and after the SAO is done, an adaptive loop filter (ALF) is selectively applied, thus resulting in better quality of decoded images as compared with when only deblocking filter is applied.

### BRIEF DESCRIPTION OF THE DRAWINGS

Fig. 1 is a concept view illustrating a recursive coding unit according to an example embodiment of the present invention.
Fig. 2 is a view illustrating a neighbor block as a spatial candidate.
Fig. 3 is a view illustrating a neighbor block as a temporal candidate.
Fig. 4 is a view schematically illustrating a device of encoding a 3D image according to an example embodiment of the present invention.
Fig. 5 is a flowchart schematically illustrating a method of encoding a 3D image according to an example embodiment of the present invention.
Fig. 6 is a concept view illustrating a method of encoding an image using block merging according to an example embodiment of the present invention.
Fig. 7a shows an example where one picture is partitioned into prediction blocks in a quadtree-based division scheme.
Figs. 7b and 7c are concept views illustrating an encoding method using block merging in the case of asymmetric partitioning according to another example embodiment of the present invention.
Fig. 8 is a block diagram illustrating the configuration of a 3D image encoding device using block merging according to an example embodiment of the present invention.
Fig. 9 is a flowchart illustrating a 3D image encoding method using block merging according to an example embodiment of the present invention.
Fig. 10 is a view illustrating an example of a block boundary that is subject to deblocking filtering according to an example embodiment of the present invention.
Fig. 11 is a flowchart illustrating a deblocking filtering method according to an example embodiment of the present invention.
Fig. 12 is a flowchart illustrating in detail the step of setting a block boundary strength of Fig. 11.
Fig. 13 is a flowchart illustrating an in-loop filtering method according to another example embodiment of the present invention.

### DESCRIPTION OF EXEMPLARY EMBODIMENTS

Various modifications may be made to the present invention and the present invention may have a number of embodiments. Specific embodiments are described in detail with reference to the drawings.

However, the present invention is not limited to specific embodiments, and it should be understood that the present invention includes all modifications, equivalents, or replacements that are included in the spirit and technical scope of the present invention.

The terms "first" and "second" may be used to describe various components, but the components are not limited thereto. These terms are used only to distinguish one component from another. For example, the first component may be also named the second component, and the second component may be similarly named the first component. The term "and/or" includes a combination of a plurality of related items as described herein or any one of the plurality of related items.

When a component is "connected" or "coupled" to another component, the component may be directly connected or coupled to the other component. In contrast, when a component is directly connected or coupled to another component, no component intervenes.

The terms used herein are given to describe the embodiments but not intended to limit the present invention. A singular term includes a plural term unless otherwise stated. As used herein, the terms "include" or "have" are used to indicate that there are features, numerals, steps, operations, components, parts or combinations thereof as described herein, but do not exclude the presence or possibility of addition of one or more features, numerals, steps, operations, components, parts or components thereof.

Unless defined otherwise, all the terms used herein including technical or scientific terminals have the same meanings as those generally understood by those of ordinary skill. The terms defined in the generally used dictionaries should be understood as having meanings identical to those interpreted in the context, and unless defined otherwise, the terms should not be interpreted excessively formal.

Hereinafter, preferred embodiments of the present invention will be described in greater detail with reference to the accompanying drawings. The same reference numerals refer to the same components throughout the drawings, and the description of the same components is not repeated.

According to an embodiment of the present invention, inter prediction/intra prediction transformation, quantization, entropy encoding or other encoding or decoding may be carried out using an extended macroblock size of 32x32 pixels or more in order to apply to high-resolution images of a HD (High Definition) or more, and the recursive coding unit (CU) structure to be described below may be used to perform encoding and decoding.

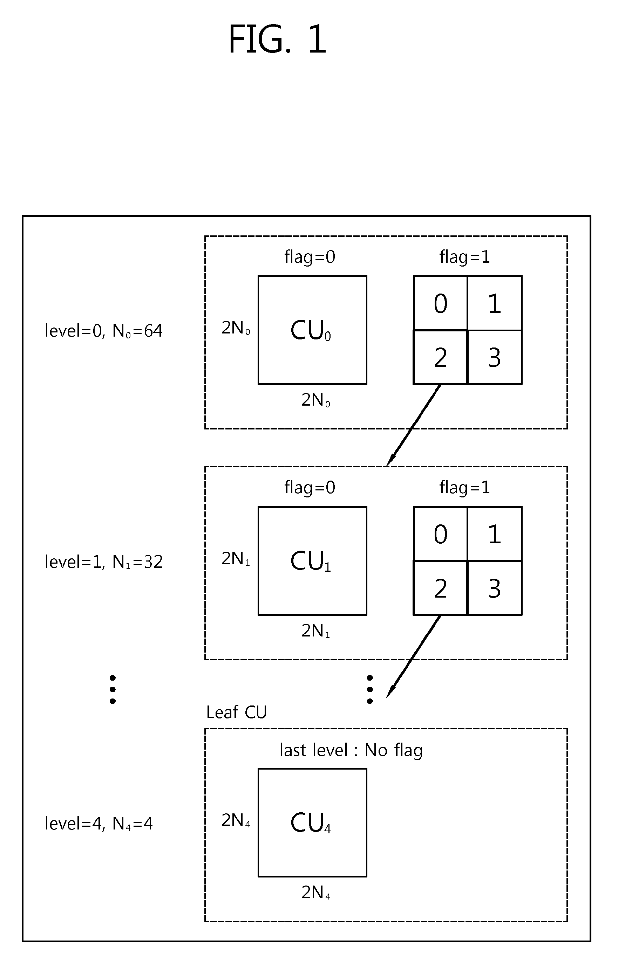

Fig. 1 is a concept view illustrating a recursive coding unit according to an example embodiment of the present invention.

Referring to Fig. 1, each coding unit CU is shaped as a square and has a variable size of 2N2N (unit: pixels). Inter prediction, intra prediction, transformation, quantization, deblocking filtering, and entropy encoding may be performed on a per-coding unit CU basis.

The coding unit CU may include a largest coding unit (LCU) and a smallest coding unit (SCU), and the size of the largest coding unit LCU and the smallest coding unit SCU may be represented by the exponentiation of 2 which has a size of 8 or more.

The size of a coding unit may be powers of 2 that are eight or more-for example, 8x8, 16x16, 32x32, and 64x64. Further, the size of the coding unit may be 128x128 or more.

According to an example embodiment of the present invention, the coding unit CU may have a recursive size structure. Fig. 1 shows an example where the largest coding unit LCU, CU₀, has an edge size (2N₀) of 128 (No=64) and the largest layer level or layer depth is 5. A recursive structure may be represented in a series of flags. For example, in case the flag value of a coding unit CUₖ with a layer level or layer depth of k is 0, the coding unit CUₖ is encoded as to the current layer level or layer depth.

Further, in case the flag value is 1, the coding unit CUₖ having a current layer level or layer depth of k is split into four independent coding units CUₖ₊₁ that have a layer level or layer depth of k+1 and a size of Nₖ₊₁Nₖ₊₁. In such case, the coding unit CUₖ₊₁ may be represented as a sub coding unit of the coding unit CUₖ. The coding unit CUₖ₊₁ may be recursively processed until the layer level or layer depth of the coding unit CUₖ₊₁ reaches a largest allowable layer level or layer depth. In case the layer level or layer depth of the coding unit CUₖ₊₁ is the same as the largest allowable layer level or layer depth-for example, 4 in the example shown in Fig. 1, no more splitting is permitted.

The size of the largest coding unit LCU and the size of the smallest coding unit SCU may be included in a sequence parameter set (SPS). The sequence parameter set SPS may contain the largest allowable layer level or layer depth of the largest coding unit LCU. For example, as shown in Fig. 1, the largest allowable layer level or layer depth is 5, and in case the size of an edge of the largest coding unit LCU is 128 (unit: pixels), there may be five coding unit sizes such as 128x128(LCU), 64x64, 32x32, 16x16 and 8x8(SCU). In other words, if the size of the largest coding unit LCU and the largest allowable layer level or layer depth are given, the allowable coding unit size may be determined.

As described above, if the process of hierarchically splitting the coding unit is complete, inter prediction or intra prediction may be conducted on the leaf coding unit of the coding unit layer tree without further splitting, and such leaf coding unit is used as a prediction unit that is a basic unit for inter prediction or intra prediction. Further, in order for inter prediction or intra prediction, the leaf coding unit may be subjected to partitioning. Partitioning is carried out on a prediction unit PU. Here, the prediction unit PU means a basic unit for inter prediction or intra prediction and may be an existing macroblock unit or sub-macroblock unit or may be an extended macroblock unit having a size of 32x32 pixels.

All information relating to prediction (motion vector, differential values between motion vectors, etc.) are transmitted to a decoder per prediction unit that is a basic unit for inter prediction.

Such prediction unit may be inter-predicted in direct mode, skip mode, and merging mode. Among them, the merging mode refers to splitting one picture hierarchically to the leaf coding unit, merging the current prediction unit with a previously encoded candidate, applying the same motion parameter to it, and sending it to a decoder. Here, the motion parameter may include, e.g., a motion vector and a difference value between motion vectors. In the case of inter prediction, a set of all the prediction blocks is defined as a "temporary block," and a set of blocks permitted to be merged with a specific block is defined as a "mergeable block."

As references for the mergeable blocks, for example, top neighbor samples and left neighbor blocks of the current prediction unit or two blocks of a top neighbor block and a left neighbor block of the current prediction unit may be predetermined. Or, as references for the mergeable blocks, two or more blocks, e.g., all of the top neighbor blocks and all of the left neighbor blocks of the current prediction unit may be previously determined.

The references for the mergeable blocks may be predetermined according to a mutual agreement between the encoder and the decoder. For example, as described above, the top neighbor blocks and left neighbor blocks of the current prediction unit may be determined as default, and separate information indicating a reference for mergeable blocks might not be sent to the decoder. Or, information indicating a reconstructed for mergeable blocks may be sent to the decoder.

In case the merge flag is '1' (true), the following operation is performed. In case the mergeable block set includes only one block, the block included in the mergeable block set is used for block merging. In case the mergeable block set includes two blocks that have the same motion parameters, the motion parameters of the two blocks belonging to the mergeable block set are used for the current prediction unit as well. For example, in case merge_left_flag is '1' (true), a block corresponding to a left neighbor sample position of upper-left sample positions for the current prediction unit in the mergeable block set may be selected, and in case merge_left_flag is '0' (false), a block corresponding to the remaining upper neighbor sample position of the upper-left sample positions for the current prediction unit in the mergeable block set may be selected. The motion parameters for the selected blocks are also used for the current prediction unit.

Blocks containing direct (upper or left) neighbor samples in the upper-left sample positions may be included in the mergeable block set. Accordingly, the current prediction unit is merged with the blocks in the mergeable block set. If merge_flag is 0 (false), the current prediction unit is not merged with any block.

Meanwhile, during the encoding process, a residue is generated by conducting a subtraction between the prediction block (or predicted prediction unit) and the current block (or current prediction unit) and DCTs (Discrete Cosine Transforms) and quantizes the residue. Here, transforming the residue may be conducted based on information on the size of the prediction unit. For example, transformation may be carried out with a maximum size of 32x32 pixels or 64x64 pixels. Or, the transformation may be performed on a per-separate transform unit (TU) basis independently from the prediction unit size information. For example, the size of the transform unit (TU) may be from 4x4 pixels up to 32x32 pixels. Further, the maximum size of the transform unit (TU) may be 32x32 pixels or more-for example, 64x64 pixels. The transform unit size information may be included in the transform unit information and may be transmitted to the decoder.

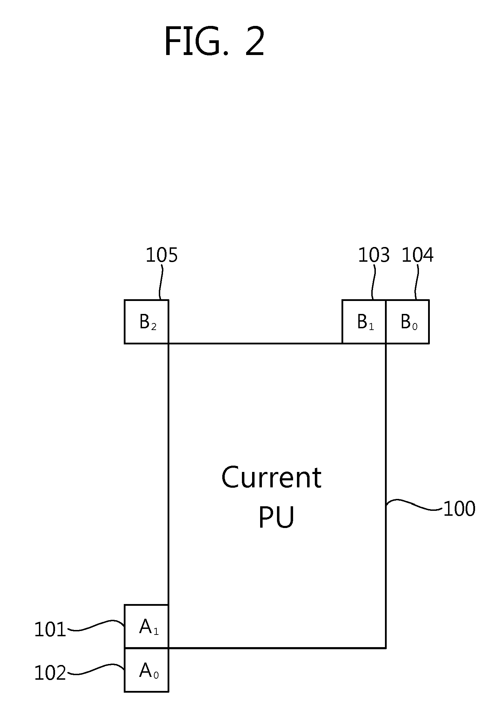

Fig. 2 is a view illustrating a neighbor block as a spatial candidate. In a typical scenario, a neighbor block may include a number of blocks neighboring the current prediction unit. For example, a neighbor block adjacent to a left side of the current prediction unit or a neighbor block adjacent to a top side of the current prediction unit may be used as spatial candidates. In particular, in a hierarchical-structure encoding method, the size of neighbor blocks might not be constant, and neighbor blocks having different block sizes, if positioned adjacent to the current prediction unit, may be also utilized as neighbor blocks used for inter prediction.

Referring to Fig. 2, spatial neighbor blocks that may be used upon inter prediction for the current prediction unit (PU) in a method of encoding a 3D image according to an example embodiment of the present invention may include a block A₁ 101, a block A₀ 102, a block B₁ 103, a block B₀ 104, and a block B₂ 105. The blocks 101, 102, 103, 104, and 105 are blocks that would have the highest chance to be prediction motion vector candidates upon experimentally predicting motion vectors by inter prediction. The blocks 101, 102, 103, 104, and 105 may have priorities determined upon predicting motion vectors to thus determine whether they may be used as prediction motion vectors. The priorities may be decreased in the order of the block A₁ 101, block A₀ 102, block B₁ 103, block B₀ 104, and block B₂ 105, and based on the priorities, whether the blocks may be used as candidate prediction motion vectors is sequentially determined, so that two usable motion vectors may be selected as final candidate prediction motion vectors.

Although not shown in the drawings, spatial neighbor blocks of the current prediction unit 100 in a method of encoding a 3D image according to another example embodiment of the present invention may include a block adjacent to a left side of the current prediction unit 100, a block adjacent to a top side of the current prediction unit 100, and an upper and right block of the current prediction unit 100.

Further, according to another example embodiment of the present invention, spatial neighbor blocks of the current prediction unit 100 in a method of encoding a 3D image may include a block adjacent to an uppermost and left side of the current prediction unit 100, a block adjacent to an upper and leftmost side of the current prediction unit 100, and an upper and right block of the current prediction unit 100.

In another example embodiment of the present invention, the middle values of the horizontal component and vertical component of a motion vector of a neighbor block may be used to generate a prediction motion vector of the current prediction unit 100.

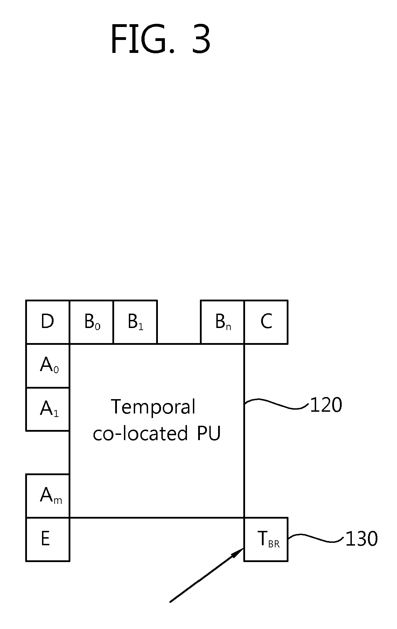

Fig. 3 is a view illustrating a neighbor block as a temporal candidate. As shown in Fig. 3, temporal neighbor units that may be used upon inter prediction for a current prediction unit in a method of encoding a 3D image according to an example embodiment of the present invention may include a block TBR 130. Referring to Fig. 3, the block TBR 130 is a block adjacent to a right side of a lower and rightmost neighbor block among neighbor blocks of a block 120 at a position corresponding to the current prediction unit in a reference picture. Among the temporal candidate blocks, only the block TBR 130 may be considered as a candidate block of a prediction motion vector.

Referring to Figs. 2 and 3, a total of six neighbor blocks including a lowest and left block 101 of the current prediction unit 100, a block 102 adjacent to a lower side of the block 101, an upper and rightmost block 103 of the current prediction unit, a block 104 adjacent to a right side of the block 103, an upper and left block 105 of the current prediction unit 100, and a block 130 positioned along a lower and right diagonal line at a position corresponding to the current prediction unit of the previous reference image, may be used to predict a motion vector of the current prediction unit 100. In other words, the motion vectors of a total of six neighbor blocks become a group of prediction motion vector candidates for determining a prediction motion vector of the current prediction unit 100. In some cases, there may be neighbor blocks that might not be used when predicting a motion vector of the current prediction unit, and in such case, the neighbor blocks that cannot be used are not used for inter prediction as described above.

For example, when the neighbor blocks are not for inter prediction, i.e., when the neighbor blocks are for intra prediction, they do not have a prediction motion vector value and thus cannot be used. In case a neighbor block is positioned at an edge of an object and thus the motion vector value does not experience a significant change, the neighbor block is inappropriate in being used as a candidate prediction motion vector of the current prediction unit 100 and is thus classified as not usable.

Next, as set forth above, three final candidate prediction motion vectors are determined as usable prediction motion vectors from a group of six candidate prediction motion vectors, and based on the determined candidates, a bit stream is generated. Here, the three candidate prediction motion vectors may include two spatial candidates and one temporal candidate. Upon generating a bit stream, the correspondence between each bit and each motion vector may be shown in the following table.

**[Table 1]**

| Index | bin |
|---|---|
| S0 | 0 |
| S1 | 10 |
| S2 | 11 |

Referring to Table 1, it can be seen that a total of three prediction motion vectors only may be stored. Two prediction motion vectors of the neighbor blocks A₁ to B₂ enter the upper two, and the motion vector of the block 130 enters the remaining one. The three final prediction motion vectors are sequentially assigned with indexes S0, S1, and S2. Among the three candidate prediction motion vectors thusly selected, a prediction motion vector of the current prediction unit 100 is selected.

At this time, referring to Table 1 where a candidate is formed in bits, the index of the first motion vector is fixed to one bit. Accordingly, two candidates in the priority order are selected as final candidate prediction motion vectors, and the index of the highest-priority candidate prediction motion vector is assigned with relatively fewer bits. Accordingly, in case a different result from that of a determined priority order is obtained, more bits are rendered to be used for the index of the prediction motion vector to be sent last, thus deteriorating transmission efficiency.

Accordingly, a candidate most likely to be selected is first identified, and its motion vector is assigned with a first index, which is critical in view of data efficiency. At this time, the priority order that may be normally used may be defined as a first priority order. The first priority order may be experimentally determined and may be block A₁ 101→block A₀ 102→block B₁ 103→block B₀ 104→block B₂ 105 when described in connection with Fig. 3. If the motion vector of each neighbor block is sequentially an available block, an index is assigned to the motion vector of its subsequent block. If not available, then it proceeds to a next one. Accordingly, the priority order for determining availability of a motion vector is very material because the prediction motion vector of the current prediction unit 100 may vary depending on the order of the motion vector indicated in the priority order. Accordingly, there may be a method of flexibly changing the order of referring to neighbor blocks according to image characteristics. In other words, if among the neighbor blocks, a neighbor block with the highest probability of being selected as a prediction motion vector is rendered in the first candidate to be a block to be first assigned with an index, it may be advantageous in light of transmission efficiency.

A method of encoding a 3D image according to an example embodiment of the present invention considers depth information of a neighbor block for efficient encoding of a 3D image in using the above-described neighbor blocks. A 3D image has depth information in view of characteristics of 3D images. An encoder typically obtains depth information and sends the depth information, together with a multi-view video image, to a decoder.

Accordingly, as described above, neighbor blocks 101, 102, 103, 104, and 105 may be put to use while a candidate prediction motion vector may be determined based on the depth information of the neighbor blocks 101, 102, 103, 104, and 105.

That is, since a neighbor block having the same depth information as the current prediction unit 100 may be estimated as the same object as the current prediction unit 100, it may be estimated as having the same motion vector. Accordingly, depth information, which is a characteristic of a 3D image, may be applied to a typical scheme of selecting a motion vector and may be used as a candidate prediction motion vector of the current prediction unit 100. That is, it may be used as a predicted motion vector value of the current prediction unit 100.

According to an example embodiment of the present invention, among neighbor blocks of the current prediction unit 100, for example, a left adjacent neighbor block and an upper adjacent neighbor block, candidate blocks for two spatial prediction motion vectors may be chosen, and at this time, a neighbor block having the same depth as the current prediction unit 100 based on the depth information of the neighbor blocks may be selected as a current block for the prediction motion vector.

According to an example embodiment of the present invention, among the motion vectors of the neighbor blocks 101, 102, 103, 104, and 105, two spatial candidate prediction motion vectors may be selected, and depth information of the neighbor blocks 101, 102, 103, 104, and 105 may be extracted and compared with the current prediction unit 100. At this time, in case among the neighbor blocks, block A₁ 101 has a depth of 2, A₀ 102 a depth of 1, B₁ 103 a depth of 4, B₀ 104 a depth of 3, and B₂ 105 a depth of 2, and the current prediction unit 100 a depth of 2, the motion vectors of A₁ 101 and B₂ 105 having the same depth (2) as the current prediction unit 100 may be chosen as candidates for motion vector prediction of the current prediction unit 100. At this time, in case two or more neighbor blocks have the same depth information, a spatial candidate of a prediction motion vector may be selected according to the above-described first priority order.

According to another example embodiment of the present invention, in case a result of the comparison shows that none of the neighbor blocks 101, 102, 103, 104, and 105 have the same depth as the current prediction unit 100, a typical method of selecting a candidate prediction motion vector, i.e., determining availability in the order of block A₁ 101->block A₀ 102->block B₁ 103->block B₀ 104->block B₂ 105 using the first priority order-may be used to select two spatial candidates.

According to another example embodiment, in case none of the neighbor blocks have the same depth, the motion vector of the neighbor block having the smallest difference in depth from the current prediction unit 100 based on the depth difference from the current prediction unit 100 may be used as a candidate prediction motion vector for the current prediction unit 100.

As described above, the spatial neighbor blocks of the current prediction unit 100 in a method of encoding a 3D image may include a left adjacent block of the current prediction unit 100, an upper adjacent block of the current prediction unit 100, and an upper and right block of the current prediction unit 100 or an uppermost and left adjacent block of the current prediction unit 100, an upper and leftmost block of the current prediction unit 100, and an upper and right block of the current prediction unit 100.

In some cases, motion vectors of the neighbor blocks may be used to generate a prediction motion vector of the current prediction unit 100 using the middle value of each of a horizontal component and a vertical component.

Or, according to another example embodiment of the present invention, a prediction motion vector may be generated based on depth information of the neighbor blocks 101, 102, 103, 104, and 105 of the current prediction unit 100 and/or depth information of a corresponding block of an adjacent view corresponding to the current prediction unit 100 of the current view. The encoder may perform inter prediction based on the prediction motion vector (or candidate motion vector) to predict the motion vector of the current prediction unit and send it to the decoder. The decoder may select a neighbor block having the same depth as the current prediction unit among corresponding blocks of the adjacent view corresponding to the current prediction unit 100 of the current view or a motion vector of the corresponding block as a candidate prediction motion vector of the current prediction unit and perform inter prediction based on the candidate prediction motion vector to predict the motion vector of the current prediction unit, thereby reconstructing an image. In other words, since the neighbor block having the same depth information as the current prediction unit 100 and/or a corresponding prediction unit of the adjacent view may be estimated as the same object as the current prediction unit 100, it may be estimated as having the same motion vector. Accordingly, depth information that is a characteristic of 3D images may be applied to a typical scheme of selecting a motion vector and may be used as a candidate prediction motion vector of the current prediction unit 100. That is, it may be used as a predicted motion vector value of the current prediction unit 100.

In a method of encoding a 3D image according to an example embodiment of the present invention, the motion vector of a neighbor block having the same depth as the current prediction unit 100 based on depths is used as a candidate prediction motion vector of the current prediction unit 100, thus increasing accuracy of the current prediction unit 100 as a prediction motion vector. In particular, since a previously chosen prediction motion vector is converted to fewer bits, it may be advantageous in view of transmission efficiency.

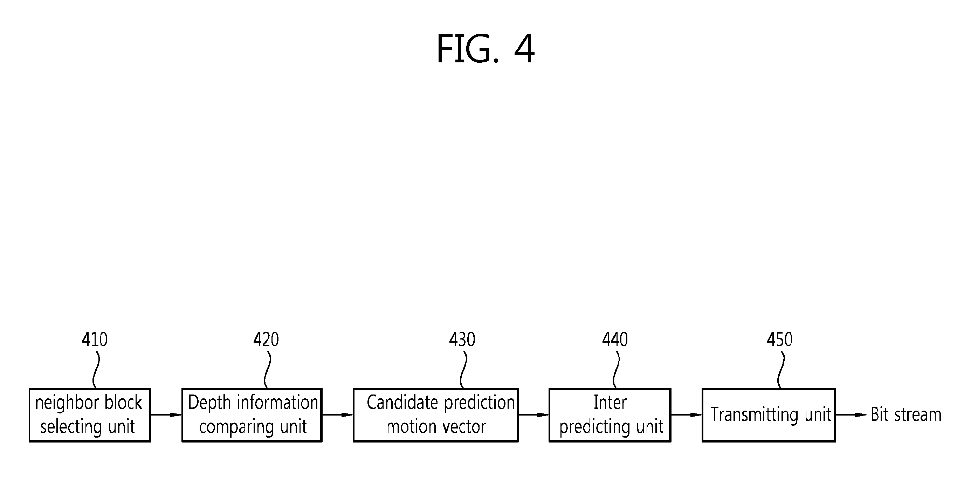

Fig. 4 is a view schematically illustrating a device of encoding a 3D image according to an example embodiment of the present invention. As shown in Fig. 4, the 3D image encoding device according to an example embodiment of the present invention may include a neighbor block selecting unit 410, a depth information comparing unit 420, a candidate prediction motion vector 430, an inter predicting unit 440, and a transmitting unit 450.

Referring to Fig. 4, the neighbor block selecting unit 410 selects a neighbor block of a current prediction unit 100 for motion vector prediction. The motion vector of the neighbor block selected by the neighbor block selecting unit 410 may be used to predict the motion vector of the current prediction unit 100. At this time, the neighbor block may use the neighbor blocks 101, 102, 103, 104, and 105 shown in Fig. 2 as spatial neighbor block candidates and the block 130 shown in Fig. 3 as a temporal neighbor block candidate.

Next, the depth information comparing unit 420 compares the depth information of the neighbor blocks 101, 102, 103, 104, and 105 selected by the neighbor block selecting unit 410 with the depth information of the current prediction unit 100. For comparison of depth information, the depth information of the neighbor blocks 101, 102, 103, 104, and 105 and the current prediction unit 100 should be extracted. Then, the extracted depths of the neighbor blocks 101, 102, 103, 104, and 105 are compared with the depth of the current prediction unit 100.

The candidate prediction motion vector 430 selects the motion vector of a neighbor block having the same depth as a candidate prediction motion vector of the current prediction unit 100 and extracts the motion vectors of the neighbor blocks.

The inter predicting unit 440 performs inter prediction based on the motion vector extracted by the candidate prediction motion vector 430 to finally predict the motion vector of the current prediction unit 100 and generates a prediction unit based on the same.

The transmitting unit 450 generates a bit stream for the prediction unit based on the prediction encoding information generated by the inter predicting unit 440 and sends the bit stream to the receiving side.

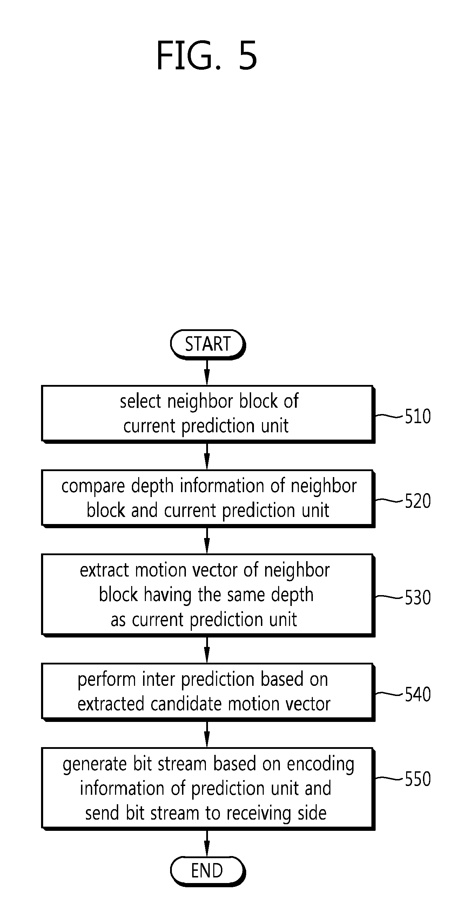

Fig. 5 is a flowchart schematically illustrating a method of encoding a 3D image according to an example embodiment of the present invention. As shown in Fig. 5, the 3D image encoding method according to an example embodiment of the present invention may include selecting a current neighbor block (510), comparing depth information of a neighbor block with depth information of a current prediction unit (520), extracting a motion vector of a neighbor block having the same depth as the current prediction unit (530), conducting inter prediction based on the extracted candidate motion vector (540), and generating a bit stream based on the prediction encoding information and sending the bit stream to a receiving side (550).

Referring to Fig. 5, in selecting a neighbor block (510), the image encoding device selects a neighbor block of the current prediction unit 100 for motion vector prediction. The motion vector of the selected neighbor block may be used to predict a motion vector of the current prediction unit 100. At this time, the neighbor blocks 101, 102, 103, 104, and 105 shown in Fig. 2 may be used as spatial neighbor block candidates, and the block 130 shown in Fig. 3 may be used as a temporal neighbor block candidate.

Next, in comparing depth information (520), the image encoding device compares the depth information of the neighbor blocks 101, 102, 103, 104, and 105 selected in selecting the neighbor block (510) with the depth information of the current prediction unit 100. For comparison of depth information, the depth information of the neighbor blocks 101, 102, 103, 104, and 105 and the current prediction unit 100 should be extracted. Then, the depth information of the neighbor blocks 101, 102, 103, 104, and 105 is compared with the depth information of the current prediction unit 100.

In extracting a candidate prediction motion vector (530), the image encoding device selects the motion vector of a neighbor block having the same depth as a candidate prediction motion vector of the 100 to extract the motion vector of the neighbor block.

In inter prediction (540), inter prediction is conducted based on the motion vector extracted in extracting the candidate prediction motion vector (530) to finally predict the motion vector of the current prediction unit 100, and based on the same, a prediction unit is generated.

In transmitting (550), the image encoding device sends the bit stream for prediction unit generated in inter prediction (540) to a receiving side.

According to example embodiments of the present invention, a 3D image decoding device and method reconstruct a motion vector of a corresponding block using the bit stream sent from the above-described encoder, generate a motion vector on a block basis by the motion predicting unit, and performs motion compensation using the reference picture and motion vector generated by the motion predicting unit, by the motion compensating unit.

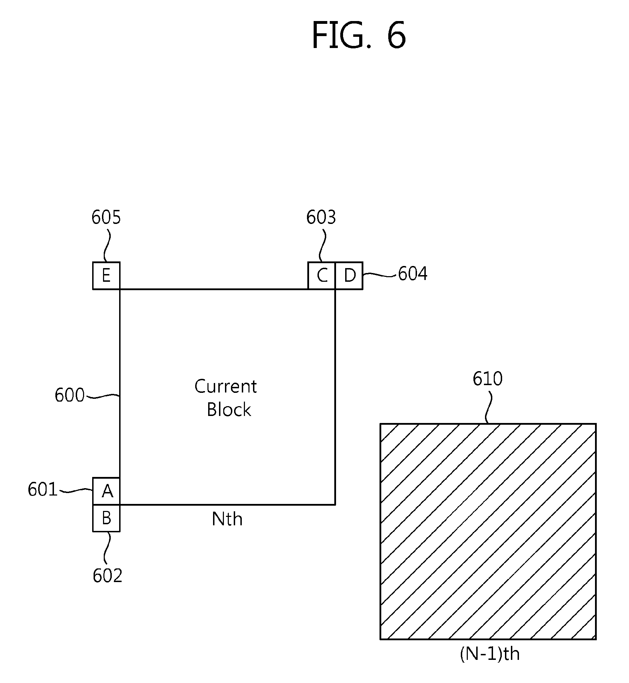

Fig. 6 is a concept view illustrating a method of encoding an image using block merging according to an example embodiment of the present invention. As shown in Fig. 6, blocks belonging to a mergeable block set configured of neighbor blocks including neighbor samples for the current prediction unit 600 may be used to perform block merging for merging with the current prediction unit.

In block merging, four spatial candidates and one temporal candidate may be selected as candidates that may be merged with the current prediction unit. Here, the temporal candidate, assuming that the current prediction unit 600 is a block belonging to an Nth picture (or frame), may be a block 610 corresponding to the current prediction unit 600 contained in a previous picture (or frame), i.e., an N-1th picture. Accordingly, the current prediction unit 600 may be merged with the block 610 and may be applied with the same parameter as the motion parameter of the block 610, and may be then sent to a decoder.

Next, four samples belonging to a spatial mergeable block set may be chosen. Preferably, considering encoding efficiency, a left and lowest block 601 of the current prediction unit, a block 602 adjacent to a lower side of the block 601, an upper and rightmost block 603 of the current prediction unit, a block 604 adjacent to a right side of the block 603, and a left and upper block 605 of the current prediction unit may be chosen.

At this time, as described above, although five samples belong to a mergeable block set, there are actually four spatial candidates. Accordingly, an order is determined to induce a candidate, and if all of the four spatial candidates are available while inducing a candidate, the last candidate may be unnecessary for candidate inducing.

Typically, spatial candidates are selected in the order of the block 601, the block 603, the block 604, the block 602, and the block 605. For example, if the block 601, the block 603, the block 604, and the block 602 all are available for spatial candidates, the block 605 is not considered upon candidate pickup. However, if one or more of the blocks 601, 603, 604, and 602 are not available, the one or more blocks are excluded with the block 605 included as a candidate.

According to an example embodiment of the present invention, a 3D image encoding method considers depth information of a neighbor block for efficient encoding of a 3D image in using neighbor blocks as described above. A 3D image would typically have depth information in view of characteristics of the 3D image, and an encoder typically obtains depth information and sends the depth information, together with a multi-view video image to a decoder.

Accordingly, as described above, the neighbor blocks 601, 602, 603, 604, and 605 may be utilized and whether to perform block merging on the neighbor blocks 601, 602, 603, 604, and 605s is determined in an order when depth information may be further considered to determine whether to perform block merging.

In other words, a neighbor block having the same depth information as the current prediction unit 600 may be estimated as the same object as the current prediction unit 600 and may be thus estimated as having the same motion vector. Thus, depth information that is a characteristics of 3D images may be further considered in typically selecting a block merging candidate, so that it may be used as a candidate for block merging of the current prediction unit 600.

According to an example embodiment of the present invention, among the neighbor blocks 601, 602, 603, 604, and 605, fourth spatial mergeable candidates may be selected. At this time, the depth information of the neighbor blocks 601, 602, 603, 604, and 605 may be extracted and may be compared with that of the current prediction unit. If among the neighbor blocks, the blocks 601, 602, 603, and 604 have the same depth as the current prediction unit 600, the blocks 601, 602, 603, and 604 are included in a mergeable block set. In case the neighbor blocks 601, 602, 603, 604, and 605 all have the same depth, if the blocks 601, 602, 603, and 604 all are available in view of the order for selecting the block merging candidate, the other blocks 601, 602, 603, and 604 than the block 605 are included in the mergeable block set. However, if none of the blocks 601, 602, 603, and 604 are available as merging candidates, the block 605 may be included in the mergeable block set.

According to another example embodiment of the prediction, in case a result of the comparison shows that none of the neighbor blocks 601, 602, 603, 604, and 605 have the same depth as the current prediction unit 600, a typical block merging candidate selecting scheme may be used to determine availability in the order of the block 601->block 603->block 602->block 604->block 605, thus selecting four spatial candidates.

According to still another example embodiment, in case a result of the comparison shows there is no neighbor block having the same depth, a neighbor block having the smallest depth difference from the current prediction unit 600 based on the differences in depth from the current prediction unit 600 may be used as a candidate block mergeable with the current prediction unit 600.

In a method of encoding a 3D image according to an example embodiment of the present invention, a neighbor block having the same depth as the current prediction unit 600 based on depths may be selected as a mergeable block candidate of the current prediction unit 600 that is then used for inter prediction. Accordingly, accuracy in encoding the current prediction unit 600 may be increased, and accurate prediction may lead to an enhancement in quality.

In selecting a final block for block merging after selecting a candidate block set for block merging, the neighbor blocks of the current prediction unit 600, which are included in the mergeable block set, are subjected to determination as to whether they have the same motion vector, so that a neighbor block having the same motion vector may be selected as the final block for block merging, thereby conducting block merging.

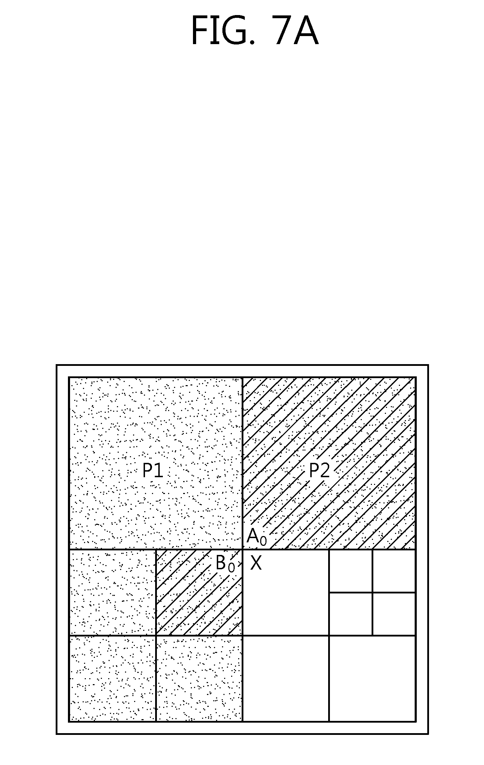

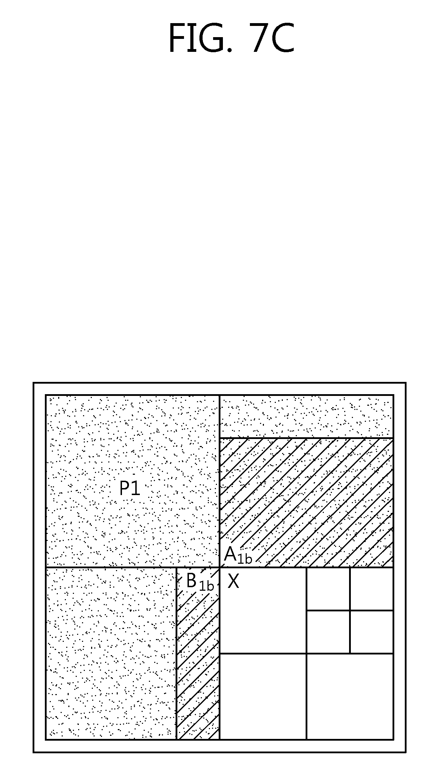

Figs. 7a and 7c show partitioned neighbor blocks according to example embodiments of the present invention. Fig. 7a shows an example where one picture is partitioned into prediction blocks in a quadtree-based division scheme. In Fig. 7a, two largest-size blocks P1 and P2 at an upper side are macroblocks that are prediction blocks of the largest size. The remaining blocks in Fig. 7a are obtained by performing subdivision on a corresponding macroblock. The current prediction unit is denoted 'X.'

A mergeable block may be generated as follows.

Starting from an upper and left sample position of the current prediction unit, a left neighbor sample position of the current prediction unit and an upper neighbor sample position of the current prediction unit play a role as candidate block positions for block merging. In case the mergeable block set is not empty, a merge_flag indicating that the current prediction unit is to be merged with a mergeable block is sent to a decoder. Otherwise, i.e., when merge_flag is '0' (false), this indicates that there is no mergeable block, and motion parameters are sent to the decoder with none of the temporary blocks subjected to block merging.

If merge_flag is '1' (true), the following operation is performed. In case the mergeable block set contains only one block, the block included in the mergeable block set is used for block merging. If the mergeable block set contains two blocks that have the same motion parameters, the motion parameters of the two blocks in the mergeable block set are used for current prediction unit as well. For example, in case merge_left_flag is '1' (true), the left neighbor sample position of the upper-left sample position for the current prediction unit X in the mergeable block set may be selected, and in case merge_left_flag is '0' (false), the remaining upper neighbor sample position of the upper-left sample position for the current prediction unit X in the mergeable block set may be selected. The motion parameters for the blocks selected as above may be used for the current prediction unit as well.

Referring to Fig. 7a, blocks ('Ao' and 'Bo') including direct (upper or left) neighbor samples at the upper-left sample position may be contained in a mergeable block set. Accordingly, the current prediction unit X is merged with block Ao or block Bo. If merge_flag is 0 (false), the current prediction unit X is not merged with block Ao nor block Bo. If block Ao and block Bo have the same motion parameters, even when the current prediction unit is merged with either block Ao or block Bo, the same result is obtained, and thus, differentiation between blocks Ao and Bo is not needed. Accordingly, in such case, merge_left_flag need not be sent. Otherwise, i.e., when blocks Ao and Bo have different motion parameters, if merge_left_flag is 1, the current prediction unit X is merged with block Bo, and if merge_left_flag is 0, the current prediction unit X is merged with block Ao.

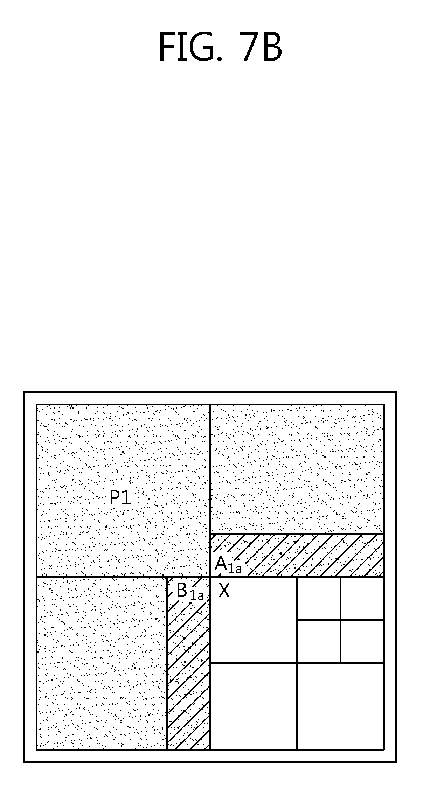

Figs. 7b and 7c are concept views illustrating an encoding method using block merging in the case of asymmetric partitioning according to another example embodiment of the present invention. Figs. 7b and 7c show two examples of block merging when using geometric partitioning upon inter prediction, but the present invention is not limited to the scenarios shown in Figs. 7b and 7c. Accordingly, block merging according to another example embodiment of the present invention may also apply to various combinations of partitioning as well.

Referring to Fig. 7b, blocks ('A1a' and 'B1a') including upper or left neighbor samples at the upper-left sample position of the current prediction unit X may be contained in a mergeable block set. Accordingly, the current prediction unit X is merged with block A1a or block B1a. If merge_flag is 0 (false), the current prediction unit X is not merged with block A1a nor block B1a. For example, in case merge_left_flag is '1' (true), block B1a including left neighbor samples at the upper-left sample position for the current prediction unit X in the mergeable block set may be selected to be merged with the current prediction unit X, and in case merge_left_flag is '0' (false), block A1a including the remaining upper neighbor samples at the upper-left sample position for the current prediction unit X in the mergeable block set may be selected to be merged with the current prediction unit X.

Referring to Fig. 7c, the current prediction unit X is merged with block A1b or block B1b belonging to the mergeable block set. If merge_flag is 0 (false), the current prediction unit X is not merged with block A1b nor block B1b. In case merge_left_flag is '1' (true), block B1b in the mergeable block set may be selected to be merged with the current prediction unit X, and in case merge_left_flag is '0' (false), block A1b may be selected to be merged with the current prediction unit X.

As described above, a neighbor block generated by asymmetrical partitioning as well as a neighbor block generated by symmetrical partitioning may be used as a candidate block for block merging. Further, a neighbor block generated by geometric partitioning also may be utilized for block merging.

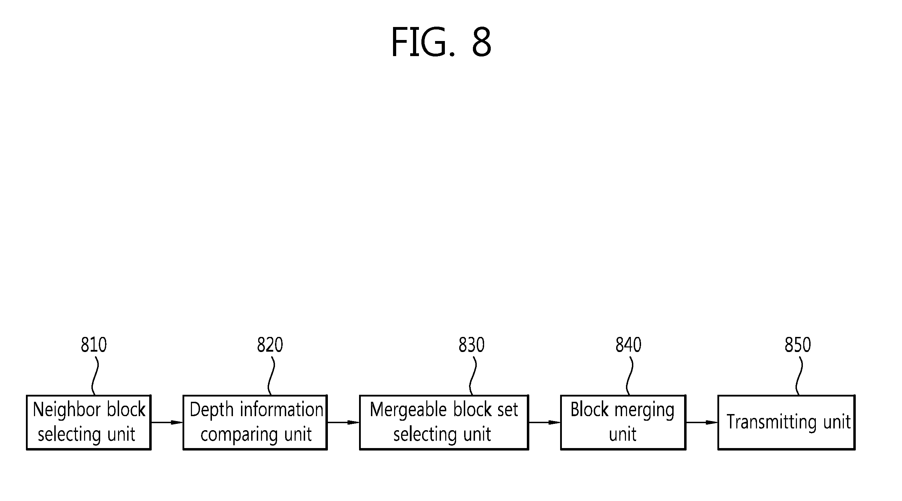

Fig. 8 is a block diagram illustrating the configuration of a 3D image encoding device using block merging according to an example embodiment of the present invention. As shown in Fig. 8, the 3D image encoding device according to an example embodiment of the present invention may include a neighbor block selecting unit 810, a depth information comparing unit 820, a mergeable block set selecting unit 830, a block merging unit 840, and a transmitting unit 850.

Referring to Fig. 8, the neighbor block selecting unit 810 selects a neighbor block of the current prediction unit 600 as a candidate for block merging. The neighbor block selected by the neighbor block selecting unit 810 may be merged with the current prediction unit 600. At this time, the neighbor block may include the neighbor blocks 601, 602, 603, 604, and 605 shown in Fig. 6 as spatial neighbor block candidates.

Next, the depth information comparing unit 820 compares the depth information of the neighbor blocks 601, 602, 603, 604, and 605 selected by the neighbor block selecting unit 810 with the depth information of the current prediction unit 600. For comparison of the depth information, the depth information of the neighbor blocks 601, 602, 603, 604, and 605 and the current prediction unit 600 should be extracted. Then, the extracted depths of the neighbor blocks 601, 602, 603, 604, and 605 are compared with the depth of the current prediction unit.

The mergeable block set selecting unit 830 selects a neighbor block having the same depth and generates a mergeable block set. That is, it selects candidate merging blocks of the current prediction unit 600.

The block merging unit 840 performs block merging based on the neighbor block selected by the mergeable block set selecting unit 830 to generate a motion parameter per merged block. At this time, a final block for mergeable block may be preferably selected through a determination as to whether the motion vectors are the same, so that block merging is conducted on the selected block and the current prediction unit.

The transmitting unit 850 transmits the per-block motion parameters generated by the block merging unit 840 to a decoder.

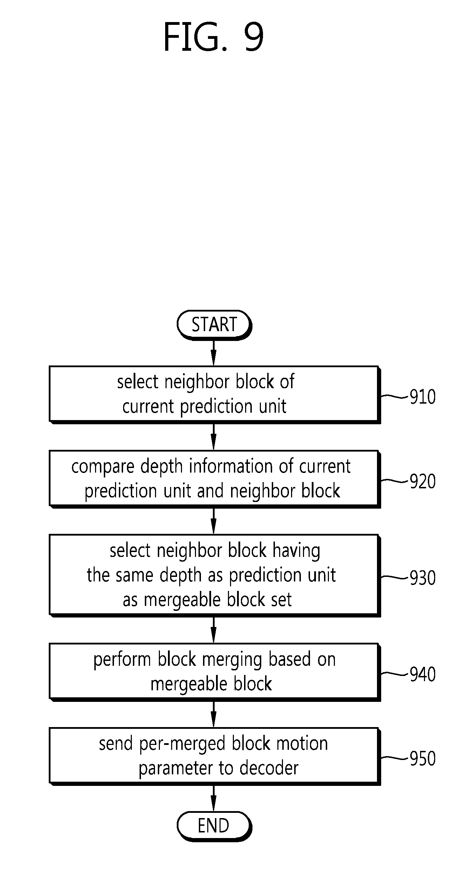

Fig. 9 is a flowchart illustrating a 3D image encoding method using block merging according to an example embodiment of the present invention. As shown in Fig. 9, the 3D image encoding method according to an example embodiment of the present invention may include selecting a current neighbor block (910), comparing depth information of the neighbor block and a current prediction unit (920), selecting a neighbor block having the same depth as the current prediction unit as a mergeable block set (930), performing block merging based on the mergeable blocks (940), and sending per-merged block motion parameters to a decoder (950).

Referring to Fig. 9, in selecting a neighbor block (910), the image encoding device selects neighbor blocks of the current prediction unit 600 as candidates for block merging. The neighbor blocks selected in selecting a neighbor block (910) may be merged with the current prediction unit 600. At this time, the neighbor blocks may use the neighbor blocks 601, 602, 603, 604, and 605 shown in Fig. 6 as spatial neighbor block candidates.

Next, in comparing the depth information (920), the image encoding device compares the depth information of the neighbor blocks 601, 602, 603, 604, and 605 selected in selecting the neighbor block (910) with the depth information of the current prediction unit 600. For such comparison, the depth information of the neighbor blocks 601, 602, 603, 604, and 605 and the current prediction unit 600 should be extracted. The depths of the neighbor blocks 601, 602, 603, 604, and 605 are then compared with the depth of the current prediction unit.

In selecting a mergeable block set (930), the image encoding device generates a mergeable block set by selecting neighbor blocks having the same depth. That is, it is selected as a candidate mergeable block of the current prediction unit 600.

In block merging (940), the image encoding device conducts block merging based on the neighbor blocks selected in selecting a mergeable block set (930) to generate a motion parameter per merged block.

In transmission (950), the image encoding device sends the per-merged block motion parameters generated in block merging (940) to a decoder.

Further, according to another example embodiment of the present invention, the image encoding device uses a disparity vector, and in case a difference in pixel value between a specific block (or current prediction unit) of a current view and a corresponding block of a neighbor view (e.g., right view) is a predetermined value or less, selects the corresponding block of the neighbor view (e.g., right view) as a candidate to be block-merged to determine whether the motion vectors are the same, and in case the motion vectors are the same, merges blocks to send the same motion parameter to the decoder. In such case, when the difference in pixel value between the specific block (or current prediction unit) of the current view and the corresponding block of the corresponding neighbor view is the predetermined value or less, the corresponding block of the neighbor view is included in a mergeable block set, and among the blocks included in the mergeable block set, blocks merged with the specific block (or current prediction unit) of the current view may be rendered to have the same motion parameter. The image decoding device may conduct motion compensation using information on the specific block (or current prediction unit) of the current view or motion parameter using such block merging to thereby generate a prediction unit and may conduct decoding.

An image decoding device and method using block merging according to an example embodiment of the present invention may reconstruct a motion vector of a block using a motion parameter of a block-merged block transmitted from the above-described encoder so that the motion predicting unit may generate a motion vector on a per-block basks and the motion compensating unit conducts motion compensation using a reference picture and the motion vector generated by the motion predicting unit.

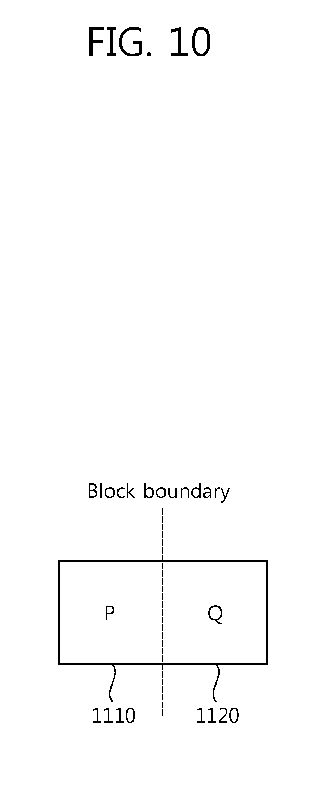

Fig. 10 is a view illustrating an example of a block boundary that is subject to deblocking filtering according to an example embodiment of the present invention. As shown in Fig. 10, based on a depth of a current block 1110 and a depth of a neighbor block 1120 encoded before the current block 1110, whether to apply a deblocking filter to a block boundary between the current block 1110 and the neighbor block 1120 is determined, and when determined to apply the deblocking filter, the block boundary strength of the block boundary may be set based on whether intra prediction mode has been applied to the current block 1110 or the neighbor block 1120 encoded prior to the current block, whether the block boundary is a boundary of a prediction unit, whether an encoded coefficient has been included, and whether different reference pictures or motion vectors have been included.

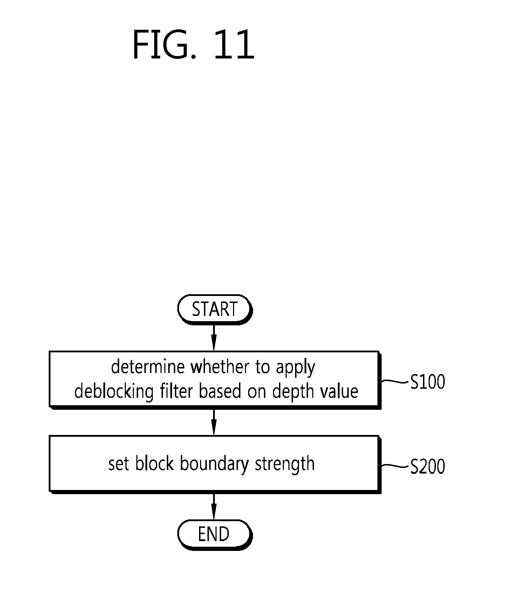

Fig. 11 is a flowchart illustrating a deblocking filtering method according to an example embodiment of the present invention. Fig. 11 illustrates a deblocking filtering process performed by a deblocking filter of an encoding device or decoding device.

As shown in Fig. 11, the deblocking filtering method according to an example embodiment of the present invention may include determining whether to apply a deblocking filter based on a depth of a current block and a depth of a previously encoded neighbor block of the current block (S100), and in case the deblocking filter is determined to be applied in step S100, setting a block boundary strength between the current block and the neighbor block (S200).

As described above, the deblocking filtering technique may provide for clearer, quality-enhanced decoded images with no distortion by eliminating a blocking phenomenon that may occur between blocks each being a unit for decoding. However, since the blocking phenomenon occurring in a block is sometimes not strong in view of the characteristics of the block, applying a strong deblocking filter regardless of the conditions of the block even when the blocking phenomenon is not strong may cause unnecessary distortions, deteriorating image quality. Further, in case the boundary between blocks is a boundary of objects, i.e., an edge, application of a deblocking filter may rather cause the boundary between objects to be unclear thus leading to a quality-deteriorated image. Accordingly, in case upon encoding the boundary between blocks is an edge, no deblocking filter applies. Meanwhile, even though the boundary between blocks is not an edge, if the different blocks do not belong to the same object, not applying the deblocking filter may give rise to a more efficient encoding method. Accordingly, in case different blocks do not belong to the same object, a need exists for a method of stopping a deblocking filter from applying.

A 3D video image may provide a depth image including depth information of an object together with a color image. Based on such depth image, whether the current block has the same object as the neighbor block encoded prior to the current block is determined to determine whether to apply a deblocking filter. In other words, whether to apply a deblocking filter may be determined based on a depth of the current block and a depth of the neighbor block encoded prior to the current block (S100).

In determining whether to apply the deblocking filter (S100), when the depth of the current block is the same as the depth of the neighbor block encoded prior to the current block, it may be determined to apply the deblocking filter to the boundary between the current block and the neighbor block encoded prior to the current block. That is, in case the depth of the current block 1110 is the same as the depth of the neighbor block 1120 encoded prior to the current block 1110, the current block 1110 and the neighbor block 1120 may be seen as blocks constituting the same object, so that a deblocking filter may be applied to mediate a blocking phenomenon. In case the depth of the current block 1110 is different from the depth of the neighbor block 1120 encoded prior to the current block 1110, it may be determined that the current block 1110 and the neighbor block 1120 constitute different objects so that no deblocking filter is applied to the block boundary between the current block 1110 and the neighbor block 1120.

Here, in determining whether to apply the deblocking filter (S100), in case a difference in depth between the current block and the neighbor block encoded prior to the current block is a predetermined threshold or less, it may be determined to apply the deblocking filter to the boundary between the current block and the neighbor block. That is, in case a difference in depth between the current block 1110 and the neighbor block 1120 encoded prior to the current block 1110 is not more than the predetermined threshold, the current block 1110 and the neighbor block 1120 are deemed as constituting the same object and the deblocking filter may be applied to mitigate a blocking phenomenon. In case the difference in depth between the current block 1110 and the neighbor block 1120 encoded prior to the current block 1110 is larger than the predetermined threshold, the current block 1110 and the neighbor block 1120 may be determined to constitute different objects so that no deblocking filter is applied to the block boundary between the current block 1110 and the neighbor block 1120.

Here, depths may be sent on a per-coding unit (CU) basis, per-prediction unit (PU) basis, or per-transform unit (TU) basis. As described above in connection with Fig. 1, encoding may be performed on a per-coding unit CU basis, per-prediction unit basis, and per-transform unit basis. Here, transmission may be conducted so that each coding unit CU has one depth, so that each prediction unit has one depth, or so that each transform unit has one depth. Further, in some cases, transmission may be done so that each pixel has a different depth from another.

In case transmission is conducted so that each pixel has different depths, the pixels positioned at a boundary between the current block 1110 and the neighbor block 1120 encoded prior to the current block are compared with each other to determine whether to apply a deblocking filter.

As described above, whether the current block 1110 and the neighbor block 1120 are included in the same object is determined using the depths of depth images to determine whether to apply a deblocking filter and to apply the deblocking filter to a boundary between objects. Accordingly, a deterioration of image quality may be prevented.

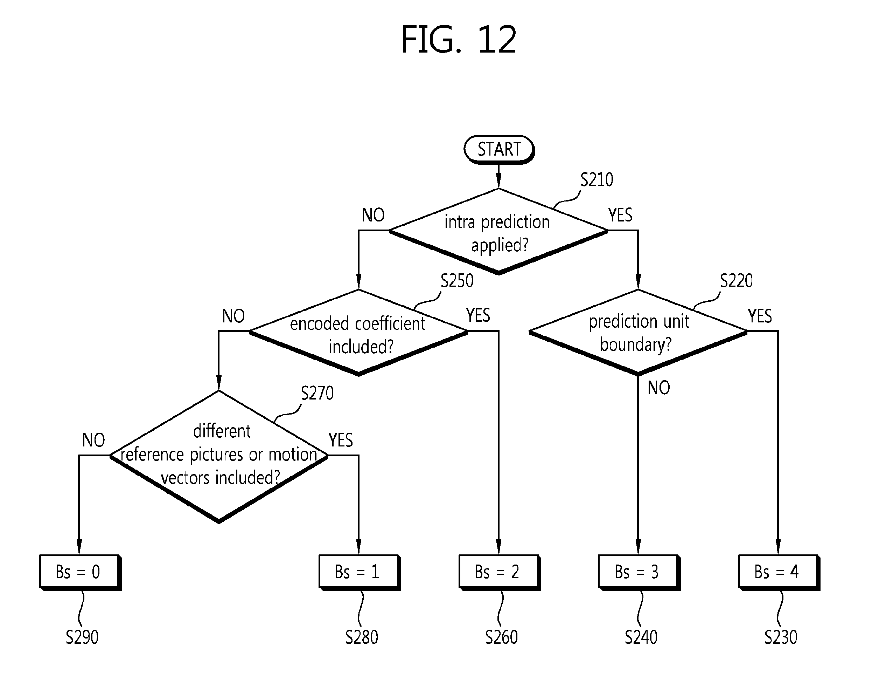

Fig. 12 is a flowchart illustrating in detail the step of setting a block boundary strength of Fig. 11.

In case step S100 determines to apply the deblocking filter, a block boundary strength between the current block and the neighbor block may be set (S200). The strength of occurrence of a blocking phenomenon may vary depending on block characteristics such as whether the current block 1110 or the neighbor block 1120 has been subjected to intra prediction or whether the boundary is a boundary between prediction units. Accordingly, a block boundary strength is set based on each block characteristic, so that the strength of applying a deblocking filter may be properly adjusted, thus leading to the optimal encoding efficiency and an enhancement in image quality.

As shown in Fig. 12, in setting a block boundary strength (S200), whether the neighbor blocks (blocks P and Q in Fig. 10) of the current block have been subjected to intra prediction is determined (S210), and in case the neighbor blocks of the current block have been subjected to intra prediction, whether the boundary between the current block and the neighbor blocks is a boundary of a prediction unit is determined (S220). In case the boundary between the current block and the neighbor blocks is a boundary of a prediction unit, the deblocking filter may set the block boundary strength (Bs) as 4 (Bs=4) (S230). Here, the block boundary strength (Bs=4) may be defined as a first value that may mean the highest strength.

In case the current block and the neighbor block have been subjected to intra prediction but the boundary between the current block and the neighbor block is not a boundary of a prediction unit, the block boundary strength (Bs) may be set as 3 (Bs=3) (S240). Likewise, Bs=3 may be defined as a second value that may mean a strength smaller than the first value.

Further, in case the neighbors block of the current block have not been subjected to intra prediction but inter prediction, whether the neighbor blocks (blocks P and Q in Fig. 10) of the current block include encoded coefficients is determined (S250), and if the neighbor blocks (blocks P and Q in Fig. 10) of the current block include encoded coefficients, the block boundary strength (Bs) is set as 2 (S260). Bs=2 may be defined as a third value that may mean a strength smaller than the second value.

In case the neighbor blocks of the current block have been subjected to not intra prediction but inter prediction and the neighbor blocks (blocks P and Q in Fig. 10) of the current block do not include encoded coefficients, whether the neighbor blocks of the current block have different reference pictures or different motion vectors from the current block is determined (S270), and in case the neighbor blocks of the current block include different reference pictures or different motion vectors from the current block, may set the block boundary strength (Bs) as 1 (S280).

Here, Bs=1 may be defined as a fourth value that may mean a strength smaller than the third value. Unless the neighbor blocks of the current block have different reference pictures or different motion vectors from the current block, the block boundary strength (Bs) may be set as 0 (S290). Bs=0 may be defined as a fifth value that may mean a strength smaller than the fourth value and that is the lowest value.

Here, the deblocking filter may conduct deblocking filtering on each of a luma component and a chroma component, and after performing deblocking filtering on vertical edges of each block (or coding unit) while shifting from the left edge of the prediction unit to the right, may conduct deblocking filtering on the horizontal edges from the upper edge of the block in a lower direction of the coding unit.

In case the deblocking filter conducts deblocking filtering on each of a luma component and a chroma component, deblocking filtering on the chroma component may be applied only when the block boundary strength (Bs) is larger than 2. That is, deblocking filtering on the chroma component may be rendered to apply when the block boundary strength is 3 (the second value) through 4 (the first value).

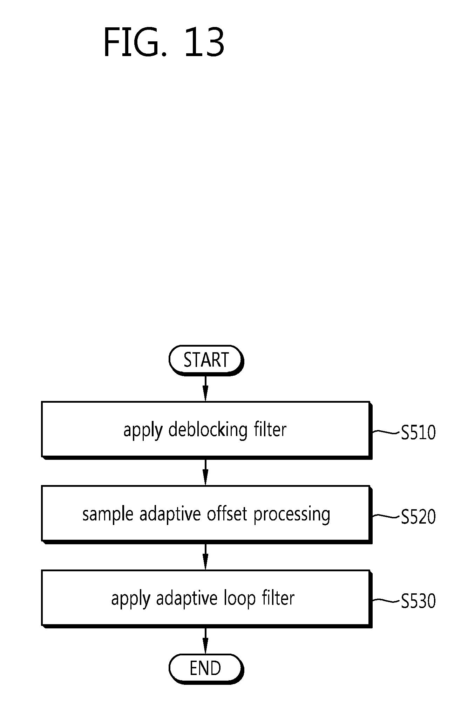

Fig. 13 is a flowchart illustrating an in-loop filtering method according to another example embodiment of the present invention.

As shown in Fig. 13, an in-loop filtering method for intra prediction encoding according to another example embodiment of the present invention may include applying the above-described deblocking filtering method (S510), performing a sample adaptive offset (SAO) process (S520), and applying an adaptive loop filter (ALF) (S530).

That is, after deblocking filtering as described above, a sample adaptive offset (SAO) for compensating a DC offset for the deblocking filter-processed pixels may be additionally processed. Here, the DC offset means an average difference between the original pixels and deblocking filter-processed pixels after transformation and quantization and may also be deemed an offset value caused due to transformation and quantization. After deblocking filtering, the current block (coding unit) may determine whether to selectively turn on/off the sample adaptive offset (SAO) in units of partitioned blocks of the current block. In other words, turning on/off of the sample adaptive offset (SAO) may be determined in units of the partitioned blocks of the coding unit and information on turning on/off the sample adaptive offset (SAO) may be sent from the encoder to the decoder.

Meanwhile, after the sample adaptive offset (SAO) applies, an adaptive loop filter (ALF) may selectively apply. The adaptive loop filter (ALF) may use a Wiener filter to compensate for errors more accurately than the deblocking filter does upon encoding. Specifically, the adaptive loop filter (ALF) may more accurately encode signals reconstructd after performing the deblocking filter and adaptive offset (SAO) using a Wiener filter that minimizes a sum of square errors between the original pixels and decoded pixels, thereby compensating for errors. The adaptive loop filter (ALF) information may be included in a slice header and may be sent to the decoder. The adaptive loop filter (ALF) information may contain a Wiener filter coefficient, adaptive loop filter (ALF) on/off information, and filter shape information. The adaptive loop filter (ALF) on/off information may be included in a slice header on a per-coding unit basis and may be sent to the decoder. The filter shape may be designed to have a symmetrical shape to reduce encoding and decoding complexity.

Although the present invention has been shown and described in connection with example embodiments thereof, it will be understood by those of ordinary skill in the art that various changes in form or detail may be made thereto without departing from the scope of the present invention defined by the following claims.

## Claims

1. A method of performing encoding on a current prediction unit in a 3D image, the method comprising:
selecting a motion vector of a neighbor block having the same depth as the current prediction unit as a candidate prediction motion vector of the current prediction unit among previously encoded neighbor blocks of the current prediction unit; and
performing inter prediction based on the candidate prediction motion vector to predict a motion vector of the current prediction unit and sending the predeicted motion vector to a decoder.

2. The method of claim 1, wherein the neighbor blocks include a first block positioned at a lowermost and left side of the current prediction unit, a second block adjacent to a lower side of the first block, a third block positioned at an upper and rightmost side of the current prediction unit, a fourth block adjacent to a right side of the third block, and a fifth block positioned at an upper and left side of the current prediction unit.

3. The method of claim 2, wherein said selecting the candidate motion vector includes, when at least three neighbor blocks have the same depth as the current prediction unit, sequentially determining whether the first block, the second block, the third block, the fourth block, and the fifth block may be used as a candidate prediction motion vector of the current prediction unit in the order of the first block, the second block, the third block, the fourth block, and the fifth block to select a candidate prediction motion vector of the current prediction unit.

4. The method of claim 2, wherein said selecting the candidate prediction motion vector includes, when there is no neighbor block having the same depth as the current prediction unit, sequentially determining whether the first block, the second block, the third block, the fourth block, and the fifth block may be used as a candidate prediction motion vector of the current prediction unit in the order of the first block, the second block, the third block, the fourth block, and the fifth block to select a candidate prediction motion vector of the current prediction unit.

5. The method of claim 1, wherein the neighbor blocks include a first block adjacent to a left side of the current prediction unit, a second block adjacent to an upper side of the current prediction unit, and a third block adjacent to a right side of the second block.

6. The method of claim 1, wherein the neighbor blocks include a first block adjacent to an uppermost and left side of the current prediction unit, a second block adjacent to an upper and leftmost side of the current prediction unit, and a third block positioned at an upper and right side of the current prediction unit.

7. A method of performing decoding on a current prediction unit in a 3D image, the method comprising:
performing entropy decoding, inverse quantization, and inverse transformation on a received bit stream;
selecting a motion vector of a neighbor block having the same depth as the current prediction unit as a candidate prediction motion vector of the current prediction unit among previously encoded neighbor blocks of the current prediction unit based on the inverse-transformed bit stream; and
performing inter prediction based on the candidate prediction motion vector and predicting a motion vector of the current prediction unit to reconstruct an image.

8. The method of claim 7, wherein the neighbor blocks include a first block positioned at a lowermost and left side of the current prediction unit, a second block adjacent to a lower side of the first block, a third block positioned at an upper and rightmost side of the current prediction unit, a fourth block adjacent to a right side of the third block, and a fifth block positioned at an upper and left side of the current prediction unit.

9. The method of claim 8, wherein selecting the candidate motion vector includes, when at least three neighbor blocks have the same depth as the current prediction unit, sequentially determining whether the first block, the second block, the third block, the fourth block, and the fifth block may be used as a candidate prediction motion vector of the current prediction unit in the order of the first block, the second block, the third block, the fourth block, and the fifth block to select a candidate prediction motion vector of the current prediction unit.

10. The method of claim 8, wherein said selecting the candidate prediction motion vector includes, when there is no neighbor block having the same depth as the current prediction unit, sequentially determining whether the first block, the second block, the third block, the fourth block, and the fifth block may be used as a candidate prediction motion vector of the current prediction unit in the order of the first block, the second block, the third the current prediction unit.

11. The method of claim 7, wherein the neighbor blocks include a first block adjacent to a left side of the current prediction unit, a second block adjacent to an upper side of the current prediction unit, and a third block adjacent to a right side of the second block.

12. The method of claim 7, wherein the neighbor blocks include a first block adjacent to an uppermost and left side of the current prediction unit, a second block adjacent to an upper and leftmost side of the current prediction unit, and a third block positioned at an upper and right side of the current prediction unit.

13. A method of encoding a 3D image by performing block merging on a current prediction unit of the 3D image, the method comprising:
merging neighbor blocks of the current prediction unit with the current prediction unit; and
transmitting a motion parameter of the merged block to a decoder, said merging the neighbor block comprising:
selecting a neighbor block having the same depth as a depth of the current prediction unit as a mergeable block set; and
determining availability as a candidate for block merging based on a block belonging to the mergeable block set, and based on a result of the determining availability, performing block merging based on a block available as a candidate for block merging.

14. The method of claim 13, wherein the neighbor blocks include a first block positioned at a lowermost and left side of the current prediction unit, a second block adjacent to a lower side of the first block, a third block positioned at an upper and rightmost side of the current prediction unit, a fourth block adjacent to a right side of the third block, and a fifth block positioned at an upper and left side of the current prediction unit.

15. The method of claim 14, wherein said performing the block merging further comprises selecting a candidate block having the same motion vector as the current prediction unit as a final candidate block among the candidate blocks.

16. The method of claim 13, wherein the neighbor block is a block split by at least one of symmetrical partitioning, asymmetrical partitioning, and geometrical partitioning.

17. A method of performing decoding on a current prediction unit in a 3D image, the method comprising:
reconstructing a residue by entropy-decoding, inverse-quantizing, and inverse-transforming a received bit stream;
generating a prediction unit by performing motion compensation using a motion parameter and prediction unit information based on the inverse-transformed bit stream; and
reconstructing an image by adding the residue to the prediction unit, wherein a neighbor block having the same depth as the current prediction unit among neighbor blocks of the current prediction unit is included in a mergeable block set, and wherein, among blocks included in the mergeable block set, a block merged with the current prediction unit has the same motion parameter.

18. The method of claim 17, wherein the neighbor blocks include a first block positioned at a lowermost and left side of the current prediction unit, a second block adjacent to a lower side of the first block, a third block positioned at an upper and rightmost side of the current prediction unit, a fourth block adjacent to a right side of the third block, and a fifth block positioned at an upper and left side of the current prediction unit.

19. The method of claim 19, wherein the neighbor block is a block split by at least one of symmetrical partitioning, asymmetrical partitioning, and geometrical partitioning.

20. A deblocking filtering method, comprising:
determining whether to apply a deblocking filter or not based on a depth value of a previously encoded neighbor block of a current block and a depth value of the current block; and
setting a block boundary strength between the current block and the neighbor block when it is determined that the deblocking filter is applied.

21. The deblocking filtering method of claim 20, wherein said determining whether to apply the deblocking filter or not includes determining to apply the deblocking filter to a boundary between the current block and the neighbor block when the depth value of the current block is the same as the depth value of the neighbor block.

22. The deblocking filtering method of claim 20, wherein said setting the block boundary strength comprises:
determining whether inter prediction has been applied to the previously encoded neighbor block of the current block or not;
when it is determined that inter prediction has been applied to the previously encoded neighbor block of the current block, determining whether the boundary between the current block and the neighbor block is a boundary of a prediction unit or not, and when the boundary between the current block and the neighbor block is the boundary of the prediction unit, setting a block boundary strength of a deblocking filter as a highest first value;
when it is determined that inter prediction has been applied to the neighbor block of the current block but the boundary between the current block and the neighbor block is not the boundary of the prediction unit, setting the block boundary strength as a second value lower than the first value;
when it is determined that not the intra prediction but inter prediction has been applied to the neighbor block of the current block, determining whether the neighbor block of the current block includes encoded coefficients;
when the neighbor block of the current block includes the encoded coefficients, setting the block boundary strength as a third value lower than the second value;
when it is determined that not the intra prediction but inter prediction has been applied to the neighbor block of the current block and when the neighbor block of the current block does not include the encoded coefficients, if the neighbor block of the current block has a different reference picture or different motion vector from the current block, setting the block boundary strength as a fourth value lower than the third value; and
when it is determined that not the intra prediction but inter prediction has been applied to the neighbor block of the current block and when the neighbor block of the current block does not include the encoded coefficients, unless the neighbor block of the current block has a different reference picture or a different motion vector from the current block, setting the block boundary strength as a lowest fifth value lower than the fourth value.

23. An in-loop filtering method of claim 20, further comprising selectively processing, per partitioned block of the current block after deblocking filtering, a sample adaptive offset (SAO) for compensating a DC offset that is an average difference between original pixels and deblocking filtered pixels for the deblocking filtered pixels after deblocking filtering.

24. The in-loop filtering method of claim 23, further comprising selectively applying an adaptive loop filter (ALF) using a Wiener filter that minimizes a sum of square errors between the original pixels and decoded pixels after pr0cessing the SAO.
